# EUROPEAN PATENT SPECIFICATION

(11) **EP 1 841 086 B1**
(45) Date of publication and mention of the grant of the patent: **23.06.2010**
(21) Application number: 07104162.8
(22) Date of filing: 14.03.2007
(51) Int. Cl.: H04B 3/44, H04B 10/08, H04B 10/17

(54) **Power feed system for a transmission network, in particular a submarine transmission network**
Stromversorgungssystem für einen Übertragungsnetzwerk, insbesonders Untersee-Übertragungsnetzwerk
Système d'alimentation d'un réseau de transmission, notamment sous-marin

(30) Priority: 27.03.2006 FR 0651038
(43) Date of publication of application: 03.10.2007
(73) Proprietor: ALCATEL, 75008 Paris (FR)
(72) Inventor: Verhaege, Thierry, 91160, Saulx-les-Chartreux (FR); Cordier, Alain, 77000, Vaux-le-Penil (FR)
(74) Representative: Shamsaei Far, Hassan

(56) References cited:
- EP-A2- 1 455 462
- JP-A- 10 041 887
- US-A- 5 526 157
- US-A1- 2003 021 556

## Description

The present invention concerns an electrical power feed system for a transmission network, in particular a submarine transmission network. It applies in particular to feeding power to repeaters in submarine fiber optic communication systems.

Intercontinental fiber optic communication systems are laid in the sea. More particularly, these networks can interconnect a plurality of terrestrial sites several thousand kilometers apart. The transmission lines used are therefore very long. The optical signals that travel in the optical fibers are attenuated over the distance. As a general rule, it is necessary to amplify these optical signals approximately every 80 or 100 kilometers to compensate the line losses. The signals are amplified, or rather re-amplified, by means of repeaters. These repeaters, based on optical amplifiers, are therefore disposed regularly along a transmission line in order to maintain good optical power levels at the line end. To be operational these repeaters must be fed with electrical power. In practice, they necessitate at their terminals a voltage of a few volts. In parallel with the transmission network as such, based on optical fibers, it is therefore necessary to add an electrical power feed network for these repeaters. This electrical power feed system is very important because, in the event of failure, it is the entire transmission network that fails. It is therefore necessary to ensure continuity of service from this electrical power feed system.

Moreover, this type of transmission network connects a plurality of sites, for example a plurality of towns. The power feed system in parallel with it is therefore also a network made up of different segments. The network architecture of the electrical system addresses the requirement for continuity of service, in particular by providing for overcoming any local failure. To this end, it is generally constructed around a main segment called a "trunk" between two power feed sources. The other segments, called "branches", are connected to the trunk and to each other by means of "branching units". The particular feature of a branch is that it includes only one power feed source, or in some cases no power feed source. US 5526157 discloses a branching unit for a submarine telecommunication system which feeds power to repeaters. In prior art systems, power feed sources have nominal voltages of the order of 10 kilovolts. Moreover, the branching units include high-voltage relays that switch the segment ends either to the sea ground, in the case of nominal operation, or to the potential of the trunk or another segment in the case of failure.

Such an electrical power feed system has a number of drawbacks. Thus reliable operation is compromised by the presence of a plurality of high-voltage relays in each branching unit. Those relays may fail and they constitute the least reliable part of the submarine network. Another drawback arises in the case of failure in a branch: communication is lost temporarily, and it is necessary to operate on the relays of the branching units to modify the connections and thus re-establish communication. This modification necessitates a non-trivial reconfiguration of the network that is complicated to carry out.

One particular object of the invention is to alleviate the drawbacks cited above. To this end, the invention consists in a system for feeding electrical power to a signal transmission network including n electrical power feeder stations and 2n-3 conductor segments, the segments including components fed with current to transmit energy to the transmission network, the segments being electrically connected in threes at nodes, each electrical power feeder station being connected to one end of a segment. An electrical power feeder station feeds an appropriate positive or negative single current I or double current 2I.

One particular embodiment of the system includes a main segment to which secondary segments are connected at nodes, the main segment being formed of segments disposed between the nodes. For example the main segment is connected at its ends to two power feeder stations each feeding a positive or negative single current I, each secondary segment being connected for example at one end to a power feeder station feeding a positive or negative double current 21.

In one embodiment the segments are connected at nodes in branching units providing permanent electrical continuity between the segments, in particular with no connection to the sea ground.

In another embodiment the segments are for example connected at nodes in branching units including a relay which, in a first position, provides electrical continuity between the secondary segment and the main segment and, in a second position, isolates the secondary segment.

The transmission network is in particular a fiber optic network. In this case the components are optical amplifiers, for example, amplifying the attenuated optical signals. The amplifiers may advantageously be disposed in parallel two by two in the segments in which the current is double 2I. More generally, p amplifiers 10 may be disposed in parallel in the segments 5 in which the current is single, equal to I, and 2p amplifiers 10 may be disposed in parallel in the segments 6 in which the current is double, equal to 2I, p being an integer greater than or equal to 1.

For example, the electrical power feeder stations advantageously have a voltage and current operating point situated on a sloping portion of the characteristic of the voltage as a function of the current, the occurrence of an insulation fault at a point of the system being detected by a variation of voltage in at least one electrical power feeder station. The electrical power feeder stations may include a resistance in series to enable them to absorb energy instead of producing it when this is necessary to maintain the required current.

The main advantages of the invention are that it makes the operation of an electrical power feed system of a submarine transmission network more reliable and safer, it adapts to different types of transmission network architecture, and is economical.

Other features and advantages of the invention will become apparent in the light of the following description given with reference to the appended drawings, in which:
- figure 1 shows an example of a prior art electrical system for feeding power to the repeaters of a transmission network, in particular a fiber optic transmission network;
- figure 2 shows repeaters disposed on a segment of the system from figure 1;
- figure 3 is a simplified representation of the electrical voltage along a segment of the system from figure 1, in nominal operation and in the case of failure;
- figure 4 is an illustration of the reconfiguration for addressing an insulation fault occurring in the system from figure 1;
- figure 5 shows an example of an electrical system in accordance with the invention;
- figure 6 shows the law of the nodes used in a system according to the invention;
- figure 7 shows the natural reaction of a system according to the invention to the appearance of an insulation fault;
- figure 8 represents the voltage-current characteristic of a power feeder used in a system according to the invention;
- figure 9 shows an example of a voltage compensating device that can be added to a power feeder used in a system according to the invention;
- figures 10a and 10b show examples of modes of feeding power to amplifiers in a system according to the invention;
- figures 11a and 11b show one embodiment of a system according to the invention in the case of a "Festoon" type transmission network configuration.

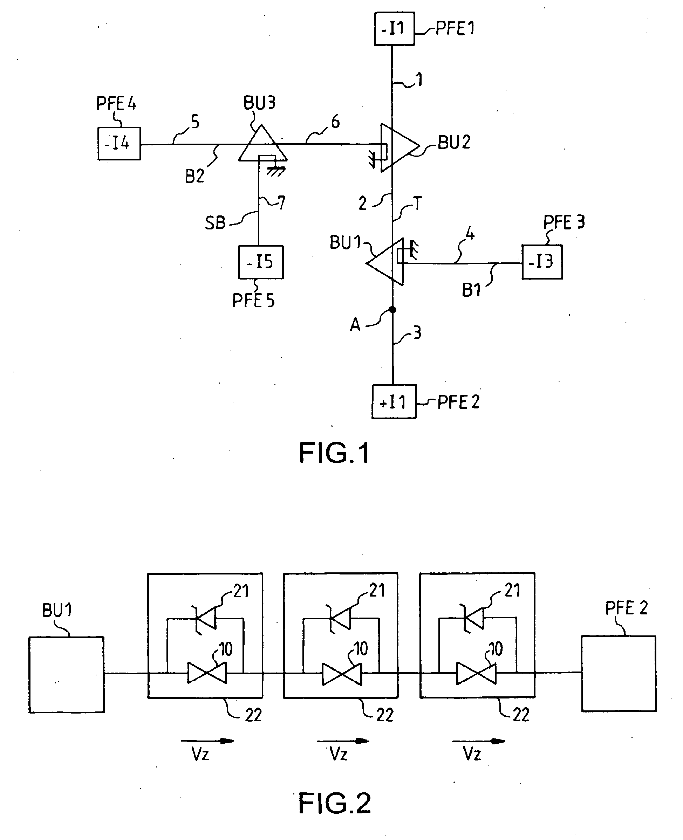

Figure 1 shows an example of the architecture of a prior art electrical system adapted to feed energy to repeaters of a transmission network, in particular a fiber optic transmission network. That energy is fed to optical amplifiers installed in the repeaters. The fiber optic network to which this electrical power feed system is added is not represented for reasons of clarity.

The electrical network includes seven segments 1, 2, 3, 4, 4, 5, 6, 7. Segments constitute branches and sub-branches, others constitute the trunk. The trunk connects two terrestrial centers whereas a branch or sub-branch connects a terrestrial center to the sea ground.

The trunk T is made up of three segments 1, 2, 3. It is connected between a first electrical power feeder PFE1 at one end and a second electrical power feeder PFE2 at the other end. Two branches B1, B2 connect to the trunk T via branching units BU1, BU2. A first branch B1, made up of a single segment 4, is connected between a third power feeder PFE3 and a first branching unit BU1. A second branch B2, made up of two segments 5, 6, is connected between a fourth power feeder PFE4 and a second branching unit BU2. A sub-branch SB, made up of a single segment 7, is connected to the second branch B2 via a third branching unit BU3. It is connected at its other end to a fifth power feeder PFE5. The third branching unit BU3 separates the two segments 5, 6 of the second branch. The electrical network is a submarine network. The electrical power feeders PFE1, PFE2, PFE3, PFE4, PFE5 are installed on land, for example, in or near telecommunication stations. The trunk, the branches and the sub-branch may connect a plurality of centers installed on different continents. Their lengths may reach several thousand kilometers. In figure 1, the electrical network is in a nominal operating state, in the absence of any disturbance.

Figure 2 shows the segment 3 of the trunk T between the first branching unit BU1 and the second power feeder PFE2. The latter delivers a current I1 that flows in the three segments 1, 2, 3 of the trunk to the first power feeder PFE1. This current I1 passes through repeaters 22. These repeaters include optical amplifiers 10 that necessitate a nominal current of the order of 0.8 A, for example. For each amplifier 10, the surplus current flows in a shunt Zener diode 21. This Zener diode 21 also has the function of regulating the voltage at the terminals of the amplifier 10. The flow of a non-zero current in a diode 21 produces at its terminal a voltage V_{z} of the order of 7 volts, for example. To ensure continuity of service, i.e. the feeding of current to the repeaters and the Zener diodes, it is therefore necessary to ensure that there flows in the trunk a current I1 greater than the current demanded by the amplifiers 10.

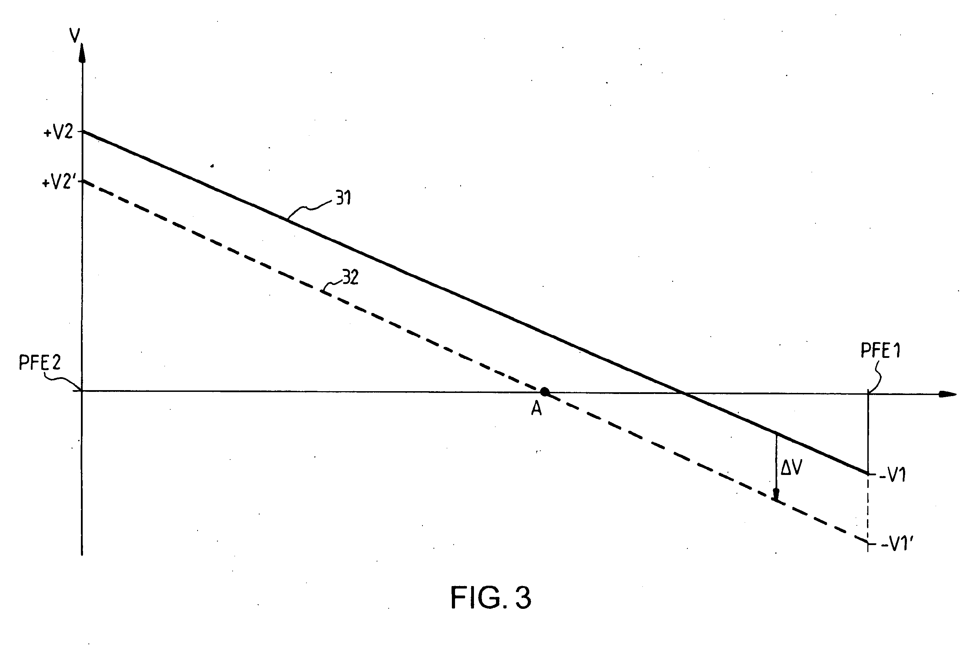

The two power feeders PFE1, PFE2 of the trunk operate as current generators. Because of this, given that, in the figure 1 example, the current I1 flows from the second power feeder PFE2 to the first power feeder PFE1, it follows that the second power feeder PFE2 has a positive voltage whereas the first power feeder PFE1 has a negative voltage. The voltage V decreases in a more or less linear manner from a positive voltage +V2 to a negative voltage -V1 between the first power feeder and the second. This voltage profile is shown by a first curve 31 in figure 3.

In the case of failure in the trunk, in particular in the event of a short circuit at a point A of the trunk, the potential at that point A goes to the zero potential, i.e. to 0. As the first curve 31 in figure 3 shows, the potential at this point was not zero. To ensure that the current I1 flows through the whole of the section it is therefore necessary to shift the decreasing voltage curve along the segment by an amount ΔV so that the new decreasing voltage curve 32 coincides with the zero potential at the point A. For this purpose, it is necessary to operate on the output voltages of the electrical power feeders PFE1, PFE2 placed at the two ends of the trunk, by setting the former to a new voltage value -V1' and the latter to a new voltage value +V2'. This operation is automatic if both power feeders are current-regulated.

Refer again to figure 1, more particularly for a description of the mode of feeding power to a branch or a sub-branch in nominal operation, i.e. in the absence of any failure. In this case, a branching unit BU1, if the first branch B1 is considered by way of example, connects the segment 4 to the sea ground, i.e. to the 0 potential. A current 13 then flows between the unit BU1 and the electrical power feeder PFE3, in one direction or the other according to the sign of the voltage at the terminals of the power feeder PFE3.

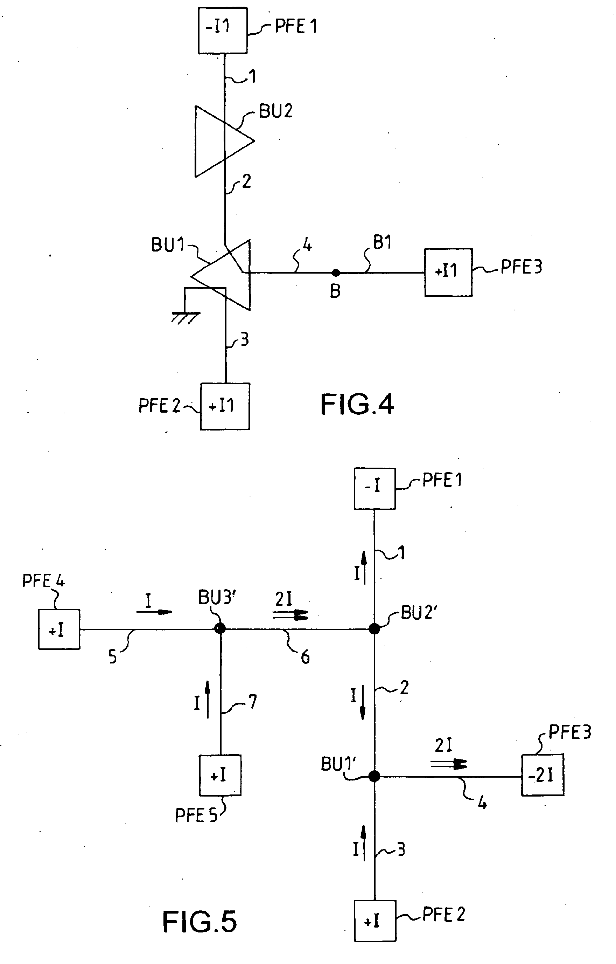

Figure 4 illustrates the case of a failure in the first branch B1. A short circuit occurs at a point B of the branch. Given that the branch B1 is not connected between two electrical power feeders like the trunk T, it is not possible to apply the solution described above in the case of failure in the trunk. A portion of the branch B1 no longer being fed with electrical power, communication is lost temporarily. To restore communication, the branching unit BU1 must switch the branch B1 to a segment 2 of the trunk T so that it becomes an integral part of a new trunk which, as demonstrated above, has the capacity to resist faults. The old segment 3 of the trunk T, connected to the branching unit BU1, is switched to the sea ground and becomes a simple branch with a current 11 flowing from the second power feeder PFE2 to the sea ground.

These switching operations are carried out by high-voltage relays. To this end, a branching unit may include up to six or seven high-voltage relays. As indicated above, these relays make the operation of the electrical power feed system as a whole less safe. Moreover, it is necessary to reconfigure the network. It is not only necessary to switch the segments but also to operate on all the electrical power feeders of the network and on the values of the currents 11, 12, 13, 14 fed by those power feeders. It is also necessary to adapt to all possibilities of failure throughout the entire network. This results in a costly reconfiguration procedure that is complex to implement. Moreover, a prior art system such as shown in figure 1 imposes connections to the sea ground at the branching units BU1, BU2, BU3, which can lead to corrosion problems at the connections to the sea ground.

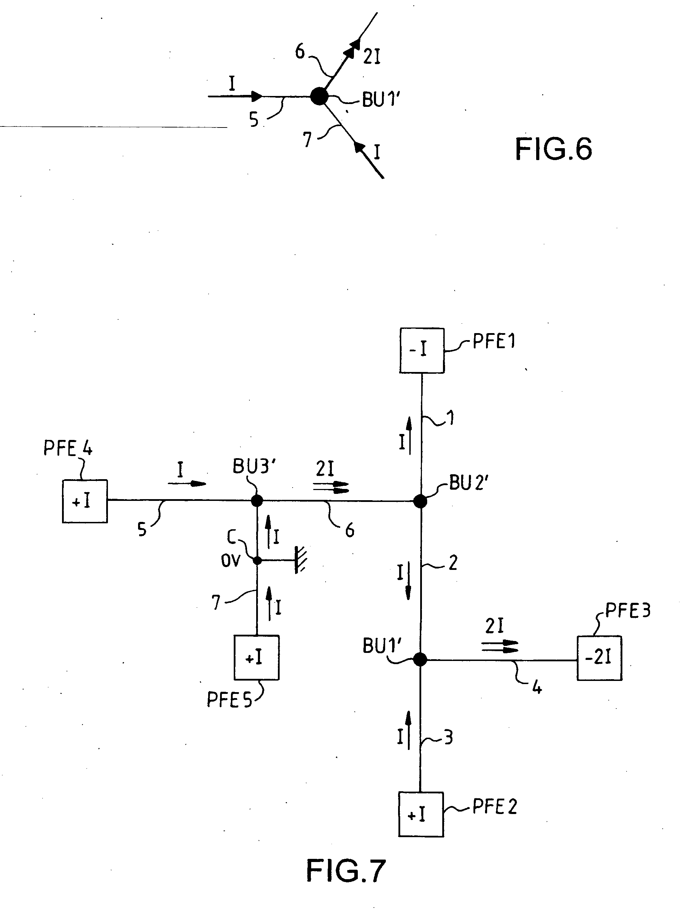

Figure 5 shows one example of an electrical power feed system according to the invention, adapted in particular to feed power to repeaters in a fiber optic transmission network. By way of example, the general architecture is the same as the figure 1 architecture. In particular, the basic segments 1, 2, 3, 4, 5, 6, 7 are the same, as are the connections to the electrical power feeders PFE1, PFE2, PFE3, PFE4, PFE5. The latter are placed at the same locations, but their voltages and currents differ from the figure 1 case. The electrical network no longer includes branches or a trunk. It is essentially made up of segments interconnected by branching units BU1', BU2', BU3'. These branching units provide the electrical connection of the segments as shown in figure 6 applied to the branching unit BU3', that connects the segments 5, 6, 7. A branching unit has the function of continuously ensuring electrical continuity between the three segments, in particular without connection to the sea ground. Each branching unit connects three segments the connection point whereof forms a node of the network.

The example of an electrical system shown in figure 5 concerns a transmission network between five centers. More particularly, the system includes five electrical power feeders and seven conductor segments. The invention may be generalized to a system with n electrical power feeder stations and 2n - 3 segments. The segments are electrically connected in threes at nodes, each electrical power feeder being connected to a segment 1, 3, 4, 5, 7. The nodes are located at the branching units that make the electrical connections. Within those branching units, the electrical connections may be hardwired. In other words, each branching unit BU1', BU2', BU3' forms a permanent connection between its three segments and this connecting node is never connected to ground or to the sea ground. The electrical losses at the level of a node are negligible.

In accordance with the law of the nodes, the sum of the currents arriving at a node is zero. According to the invention, the electrical power feeders PFE1, PFE2, PFE3, PFE4, PFE5 are regulated so that each of them feeds one of the four current values +I, -I, +2I or -2I, where I is a reference value. Regardless of the complexity of the network, it is always possible to choose these values so that the current flowing in any segment is also equal to +I, -I, +21 or -21. It is this single or double current that flows through the repeaters in figure 2. The example of figure 6, derived from figure 5, shows that a current I reaches the branching node BU3' via a segment 5 and via another segment 7 and that a current 21 leaves to a segment 6. The reference value of the current I is 1 ampere, for example. The currents then flow as shown in figure 5. At the node situated at the first branching unit BU1' a current I arrives from the second power feeder PFE2. A current 21 leaves to the third power feeder PFE3 and a current I arrives from the node situated at the second branching unit BU2'. Moreover, a current I leaves this second node to the first power feeder PFE1 and a current 21 arrives from the node situated at the third branching unit BU3'. There arrive at this third node a current I fed by the fourth power feeder PFE4 and a current I fed by the fifth power feeder PFE5. All these currents arriving at or leaving the nodes pass in transit through the segments of the electrical power feed network. Current configurations other than that shown in figure 5 are possible, of course, always starting from nominal values of I and 2I. To modify the current directions it suffices to operate on the values ± I or ± 2I fed by the electrical power feeders. There are advantageously only four current values to be provided for the electrical power feeders, each forming a true current generator. These values may be chosen so that chosen segments are exposed to a given value I of current or to twice that value 2I. For example, to minimize the number of power feeders feeding 2I, it is possible to reduce this number to zero if n is even, n/2 power feeders feeding a positive current +I and the other n/2 feeders feeding a negative current -I, or to reduce this number to 1 if n is odd, as in the figure 7 example in which only PFE3 feeds a double current. Each power feeder has a current set point to feed the required current.

Figure 7 illustrates the efficacy of a system according to the invention in ensuring continuity of service in the case of failure. More particularly, figure 7 shows a failure that has occurred in the segment 7 connecting the fifth power feeder PFE5 to the third branching unit BU3'. A short circuit has occurred at a point C of that segment causing that point to be connected to the sea ground or to the zero potential. Because of the law of the nodes, a current l continues to flow from this point C to the node situated at the third branching unit BU3'. Moreover, the fifth power feeder continues to feed a current I over the segment 7. Accordingly, despite the fault that has occurred in this segment, it continues to be fed with power by the current I both upstream and downstream of the fault.

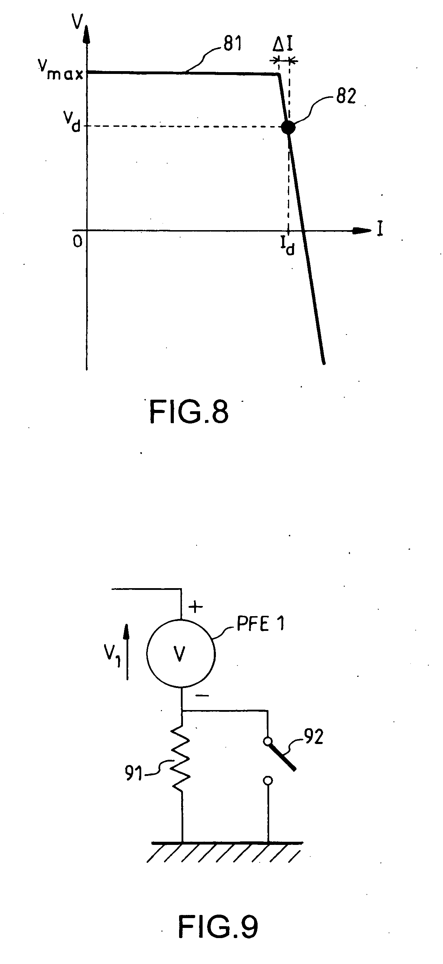

Figure 8 shows, by means of a curve 81, the current-voltage characteristic of one of the electrical power feeders PFE1, PFE2, PFE3, PFE4, PFE5 used in a system according to the invention. This curve 81, which represents the variation of the power feed output voltage V as a function of the current I delivered, comprises a flat portion followed by a steep downwardly sloping portion. The current I_{d} in nominal operation is not on the flat voltage portion but at a point 82 situated on a slope where the voltage is varying rapidly whereas the current is not varying much. In nominal operation, at this point 82, the current therefore has the value **I**_{d} and the feed voltage the value V_{d}. The steep downward slope thus occupies a current range ΔI that is very small compared to the nominal current I_{d}. For example, if I_{d} is of the order of 1 ampere, ΔI is of the order of a few milliamperes (mA). Around the nominal operating point 82, the voltage V varies very quickly as a function of the demanded current, i.e. the electrical power feeder operates as a current source.

In particular, in the case of failure, like that shown in figure 7, a very small variation of current occurs. Nevertheless, because of the voltage-current characteristic, and in particular its steep slope, this small variation in the current produces a significant variation in the voltage around the nominal value V_{d}, at least sufficient to be easily detected.

This voltage variation corresponds precisely to that which is necessary to achieve 0 V at the location of the fault C, i.e. a voltage drop equal to the voltage at the point C before the fault.

This advantageously enables the presence of a failure to be detected. A knowledge of the electrical characteristics of the network, and especially of its electrical model, in particular a knowledge of the length of the segments and their resistance per unit length, enables the location C at which the line potential reaches zero to be determined.

Under particular failure conditions, non-nominal and unusual conditions, certain power feeders may be caused to operate in their resistive sector, i.e. with the voltage and the current of opposite sign. In the particular case where the electrical power feeder itself does not allow such operation, it may be associated with a series resistance.

Figure 9 shows such a circuit applied to the first electrical power feeder PFE1, for example. In this example, a resistor 91 is connected in series to the output of the power feeder. The flow of current in this resistor creates a voltage drop greater than the required voltage drop, so that the voltage necessary at the power feeder PFE1 to maintain the required current becomes positive. This power feeding mode therefore enables the electrical power feeder PFE1 to absorb energy instead of producing it if this is necessary to maintain the required current.

In nominal operation, the resistor 91 can be short-circuited by a switch 92.

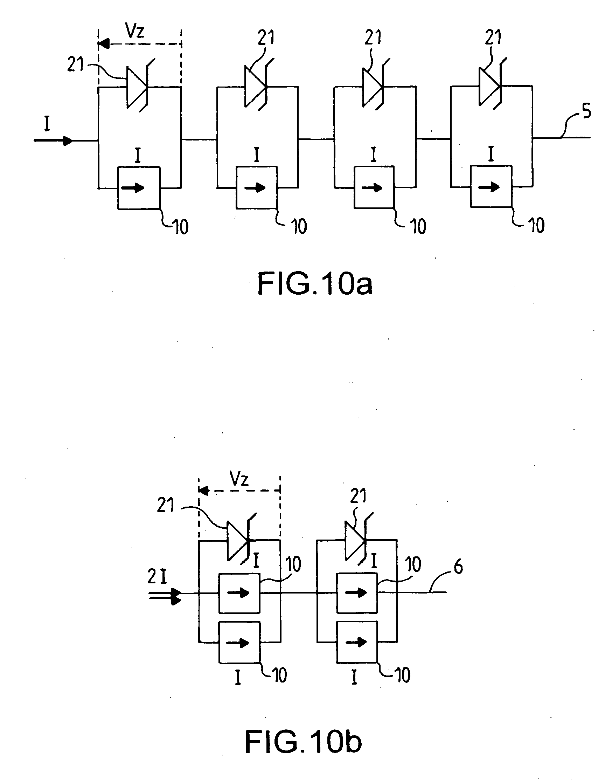

Figures 10a and 10b show possible embodiments of the amplifiers forming the repeaters. As indicated hereinabove, repeaters based on amplifiers are regularly disposed along the segments to re-amplify the transmission optical signals that are attenuated with distance. The amplifiers are laser pump amplifiers, for example.

Figure 10a shows a series of amplifiers 10 each coupled to a shunt Zener diode 21. These components 10, 21 are placed on a segment 5 through which the current I flows. Figures 10a and 10b represent the amplifiers 10 of the repeaters. The amplifiers 10 represented in these figures are intended to amplify four groups of optical fibers, for example, each amplifier amplifying one group.

In the figure 10a example, the series therefore includes four amplifiers fed with power in series. In this case, a single amplifier is shunted by a Zener diode. The amplifier 10 absorbs its operating current, for example 0.8 A and the Zener diode 21 absorbs the excess, i.e. I - 0.8 A. For example, if the current I is equal to 1 A, a current of 0.2 A flows through the diode.

In the case of figure 10b the current 21 flows through the segment 6 including the repeaters. In this case, it is possible to dispose the amplifiers 10 in parallel two by two, two amplifiers being themselves shunted by a Zener diode 21. Each amplifier 10 consumes its nominal current, for example 0.8 A. The Zener diode 21 consumes the excess current, i.e. 2I - 1.6 A, for example. This therefore economizes on Zener diodes. It also reduces the overall voltage drop since the number of Zener diodes is half that in the case of figure 10a. For example, if the voltage at the terminals of the Zener diode is of the order of 7 volts, the overall voltage drop for the circuits of figure 10a is 28 volts, whereas it is only 14 volts for the same circuits in the case of figure 10b.

The power feeding modes of figures 10a and 10b may be generalized to the case of p amplifiers in parallel. In other words, p amplifiers 10 may be disposed in parallel in the segments 5 carrying a single current, equal to I, and 2p amplifiers 10 may be disposed in parallel in the segments 6 carrying a double current, equal to 21, p being an integer greater than or equal to 1.

The same type of cable can generally be used for a single current I or a double current 21. As for the voltage drop, it is partially compensated in the case of the double current by using a power feeding mode as shown in figure 10b.

The invention advantageously reduces the number of failures other than short-circuits to the sea ground. In particular, the elimination of the high-voltage relays in the branching units eliminates the risks linked to failures of the relays. The risk of misoperation at the level of controlling the relays and the power feed voltages is also eliminated. Moreover, there is no longer any connection to the sea ground of the ends of segments with the attendant risks of corrosion. All these amelioration factors contribute greatly to making the operation of a system according to the invention more reliable and safer.

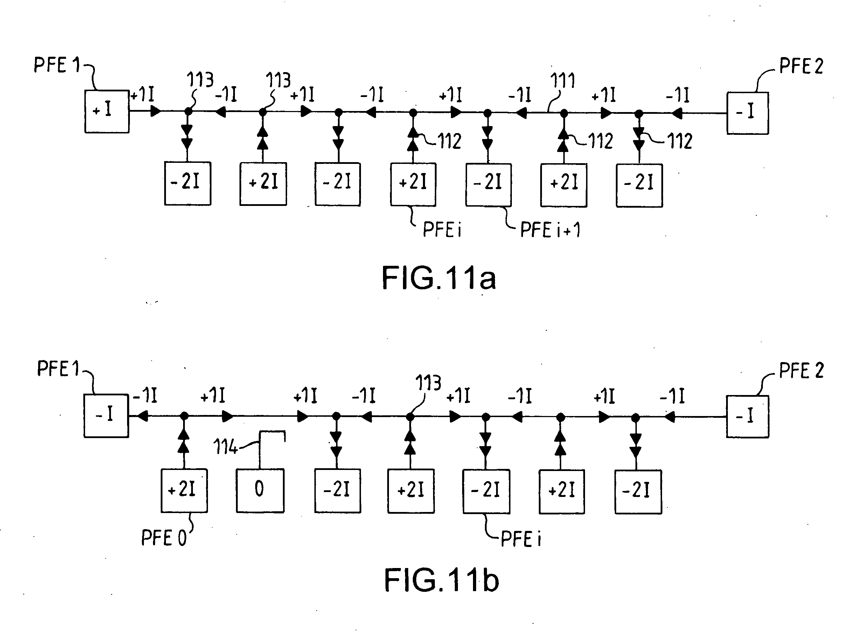

Figures 11a and 11b show an embodiment of a system according to the invention in the case of a "Festoon" type architecture. Figure 11a shows this configuration in nominal operation. In this type of configuration, there is a main segment 111 to which secondary segments 112 are connected at nodes 113. The main segment is in this case made up of a succession of segments delimited by two successive connection nodes.

Each secondary segment 112 is also connected to a power feeder PFEi. The main segment is connected between two electrical power feeders PFE1, PFE2. This network may run along a continent, for example, to be regularly connected via the secondary segments to transmission centers disposed along the coast.

For example, the first power feeder PFE1 feeds a current of +I and the second power feeder feeds a current of -I. In each of the connection nodes 113 the law of the nodes is verified. Starting from the fact that the current flowing through the segment is +I or -I, the secondary segments therefore carry a double current +2I or -2I, fed by their power feeder PFEi. In the segment 111, two successive segments carry currents in opposite directions, +I or -I. Similarly, two power feeders PFEi, PFEi+1 of secondary segments of successive rank feed currents in opposite directions, +21 or -21. In the case of failure on one of the segments of the network, the system operates as described with reference to figure 7. In a "Festoon" type configuration, a system according to the invention still has the advantage of enabling a low voltage drop along the main segment 111 because of the successive changes in direction of the current I. Because of these successive changes in direction the overall voltage drop in the line is reduced, each segment totally or partially canceling out the drop produced in the preceding segment.

Figure 11 a shows a variant embodiment of a system according to the invention, in particular in the case of a "Festoon" type architecture. In this embodiment, a relay is installed in the nodes. This advantageously enables isolation as and when required of a secondary segment and therefore its corresponding center from the remainder of the network. In this case, the segments are connected at nodes inside branching units including the relay which, in a first position, provides electrical continuity between the secondary segment 112 and the segment 111 and, in a second position, isolates the secondary segment.

Figure 11b shows a configuration in which the second secondary segment 114 starting from the first power feeder PFE1 has been isolated from the remainder of the network by opening a relay in the branching unit. Given that a node has disappeared, and to comply with the law of the nodes, the current and the voltage fed by the first power feeder PFE1 must change direction, and likewise the current and the voltage fed by the power feeder PFE0 of the first segment. These changes of sign are obtained by manually interchanging the inputs and outputs of the power feeders. Accordingly, in a system according to the invention, a secondary segment is easily isolated, because the change of direction of the current fed by the power feeders is not difficult to effect.

## Claims

1. System for feeding electrical power to a signal transmission network including n electrical power feeder stations (PFE1, PFE2, PFE3, PFE4, PFE5) and 2n-3 conductor segments (1, 2, 3, 4, 5, 6, 7), the segments including components (10, 21, 22) fed with current to transmit energy to the transmission network, **characterized in that** the segments are electrically connected in threes at nodes (BU1', BU2', BU3', 113), each electrical power feeder station being connected to one end of a segment (1, 3, 4, 5, 7), an electrical power feeder station feeding an appropriate positive or negative single current (I) or double current (21).

2. System according to claim 1, **characterized in that** it includes a main segment (111) to which secondary segments (112) are connected at nodes (113), the main segment being formed of segments disposed between the nodes.

3. System according to claim 2, **characterized in that** the main segment (111) is connected at its ends to two power feeder stations (PFE1, PFE2) each feeding a positive or negative single current (I), each secondary segment (112) being connected at one end to a power feeder station (PFEi) feeding a positive or negative double current (2I).

4. System according to any one of the preceding claims, **characterized in that** the segments are connected at nodes in branching units (BU1', BU2', BU3') providing permanent electrical continuity between the segments.

5. System according to any one of claims 1 to 3, **characterized in that** the segments are connected at nodes in branching units (113) including a relay which, in a first position, provides electrical continuity between the secondary segment (112) and the main segment (111) and, in a second position, isolates the secondary segment.

6. System according to any one of the preceding claims, **characterized in that** the transmission network is a fiber optic network.

7. System according to claim 6, **characterized in that** the components are optical amplifiers (10).

8. System according to claim 7, **characterized in that** p amplifiers (10) are disposed in parallel in the segments (5) in which there is a single current (I) and 2p amplifiers (10) are disposed in parallel in the segments (6) in which there is a double current (21), p being an integer greater than or equal to 1.

9. System according to any one of the preceding claims, **characterized in that** the electrical power feeder stations (PFEi) have a voltage and current operating point (82) situated on a sloping portion of the characteristic (81) of the voltage as a function of the current, the occurrence of an insulation fault at a point (C) of the system being detected by a variation of voltage in at least one electrical power feeder station.

10. System according to any one of the preceding claims, **characterized in that** the electrical power feeder stations include a resistance (91) in series to enable them to absorb energy instead of producing it when this is necessary to maintain the required current.

11. System according to any one of the preceding claims, **characterized in that** it is a submarine system.

## Patentansprüche

1. System zur Stromversorgung eines Signalübertragungsnetzwerks mit n Stromversorgungsstationen (PFE1, PFE2, PFE3, PFE4, PFE5) und 2n-3 Leitersegmenten (1, 2, 3, 4, 5, 6, 7), wobei die Segmente mit Strom versorgte Komponenten (10, 21, 22) enthalten, um Energie an das Übertragungsnetzwerk zu übertragen, **dadurch gekennzeichnet, dass** die Segmente in Dreiergruppen elektrisch an Knoten (BU1', BU2', BU3', 113) angeschlossen sind, wobei jede Stromversorgungsstation an ein Ende eines Segments (1, 3, 4, 5, 7) angeschlossen ist, wobei eine Stromversorgungsstation einen geeigneten positiven oder negativen Einfachstrom (I) oder Doppelstrom (2I) einspeist.

2. System nach Anspruch 1, **dadurch gekennzeichnet, dass** es ein Hauptsegment (111) umfasst, an welches sekundäre Segmente (112) an Knoten (113) angeschlossen sind, wobei das Hauptsegment aus zwischen den Knoten angeordneten Segmenten gebildet wird.

3. System nach Anspruch 2, **dadurch gekennzeichnet, dass** das Hauptsegment (111) an seinen Enden an zwei Stromversorgungsstationen (PFE1, PFE2) angeschlossen ist, welche jeweils einen positiven oder negativen Einfachstrom (I) einspeisen, wobei jedes sekundäre Segment (112) an einem Ende an eine Stromversorgungsstation (PFEI) angeschlossen ist, welche einen positiven oder negativen Doppelstrom (21) einspeist.

4. System nach einem beliebigen der vorstehenden Ansprüche, **dadurch gekennzeichnet, dass** die Segmente an Knoten in Verzweigungseinheiten (BU1', BU2', BU3') angeschlossen sind, welche eine permanente elektrische Kontinuität zwischen den Segmenten gewährleisten.

5. System nach einem beliebigen der Ansprüche 1 bis 3, **dadurch gekennzeichnet, dass** die Segmente an Knoten in Verzweigungseinheiten (113) angeschlossen sind, welche ein Relais umfassen, welches in einer ersten Position eine elektrische Kontinuität zwischen dem sekundären Segment, (112) und dem Hauptsegment (111) gewährleistet, und in einer zweiten Position das sekundäre Segment isoliert.

6. System nach einem beliebigen der vorstehenden Ansprüche, **dadurch gekennzeichnet, dass** das Übertragungsnetzwerk ein faseroptisches Netzwerk ist.

7. System nach Anspruch 6, **dadurch gekennzeichnet, dass** die Komponenten optische Verstärker (10) sind.

8. System nach Anspruch 7, **dadurch gekennzeichnet, dass** p Verstärker (10) parallel in den Segmenten, (5) in welchen ein Einfachstrom (I) anliegt, und 2p Verstärker (10) parallel in den Segmenten (6), in welchen ein Doppelstrom (2I) anliegt, angeordnet sind, wobei p eine ganz Zahl größer als oder gleich 1 darstellt.

9. System nach einem beliebigen der vorstehenden Ansprüche, **dadurch gekennzeichnet dass** die Stromversorgungsstationen (PFEi) einen Spannungs- und Strom-Arbeitspunkt (82) aufweisen, welcher auf einem schrägen Abschnitt der Eigenschaft (81) der Spannung als eine Funktion des Stroms angeordnet ist, wobei das Auftreten eines Isolationsfehlers an einem Punkt (C) des Systems aufgrund einer Spannungsschwankung in mindestens einer Stromversorgungsstation erkannt wird.

10. System nach einem beliebigen der vorstehenden Ansprüche, **dadurch gekennzeichnet, dass** die Stromversorgungsstationen einen seriengeschalteten Widerstand (91) umfassen, so dass sie Energie absorbieren anstatt Energie erzeugen, wenn es erforderlich ist, den geforderten Strom aufrechtzuerhalten.

11. System nach einem beliebigen der vorstehenden Ansprüche, **dadurch gekennzeichnet, dass** es ein Untersee-System ist.

## Revendications

1. Système pour alimenter en courant électrique un réseau de transmission de signaux comprenant n points d'alimentation électrique (PFE1, PFE2, PFE3, PFE4, PFE5) et 2n-3 segments conducteurs (1, 2, 3, 4, 5, 6, 7), les segments comprenant des composants (10, 21, 22) alimentés en courant pour transmettre de l'énergie au réseau de transmission, **caractérisé en ce que** les segments sont électriquement connectés à des noeuds (BU1', BU2', BU3', 113) par groupe de trois, chaque point d'alimentation électrique étant connecté à une extrémité d'un segment (1, 3, 4, 5, 7), un point d'alimentation électrique alimentant un courant simple (I) ou un courant double (21) positif ou négatif adapté.

2. Système selon la revendication 1, **caractérisé en ce qu'**il inclut un segment principal (111) auquel des segments secondaires (112) sont connectés à des noeuds (113), le segment principal étant formé de segments disposés entre les noeuds.

3. Système selon la revendication 2. **caractérisé en ce que** le segment principal (111) est connecté, au niveau de ses extrémités, à deux points d'alimentation (PFE1, PFE2), alimentant chacun un courant simple positif ou négatif (I), chaque segment secondaire (112) étant connecté au niveau d'une extrémité à un point d'alimentation (PFEi) alimentant un courant double positif ou négatif (21).

4. Système selon l'une des revendications précédentes, **caractérisé en ce que** les segments sont connectés à des noeuds en unités de branchement (BU1', BU2', BU3') fournissant ainsi une continuité électrique permanente entre les segments.

5. Système selon l'une des revendications 1 à 3, **caractérisé en ce que** les segments sont connectés à des noeuds en unités de branchement (113) comprenant un relais qui, dans une première position, fournit une continuité électrique entre le segment secondaire (112) et le segment principal (111) et, dans une deuxième position, isole le segment secondaire.

6. Système selon l'une des revendications précédentes, **caractérisé en ce que** le réseau de transmission est un réseau à fibres optiques.

7. Système selon la revendication 6, **caractérisé en ce que** les composants sont des amplificateurs optiques (10).

8. Système selon la revendication 7, **caractérisé en ce que** les amplificateurs p (10) sont disposés en parallèle dans les segments (5) dans lesquels circule un courant simple (I) et les amplificateurs 2p (10) sont disposés en parallèle dans les segments (6) dans lesquels circule un courant double (21), p étant un nombre entier supérieur ou égal à 1.

9. Système selon l'une des revendications précédentes, **caractérisé en ce que** les points d'alimentation électriques (PFEi) ont un point de polarisation de tension et de courant (82) situé sur une partie inclinée de la caractéristique (81) de la tension comme une fonction du courant, l'occurrence d'un défaut d'isolement au niveau d'un point (C) du système étant détectée par une variation de tension sur au moins un point d'alimentation électrique.

10. Système selon l'une des revendications précédentes, **caractérisé en ce que** les points d'alimentation électrique comprennent une résistance (91) en série pour leur permettre d'absorber de l'énergie plutôt que de la produire lorsque cela s'avère nécessaire pour maintenir le courant requis.

11. Système selon l'une des revendications précédentes, **caractérisé en ce qu'**il s'agit d'un système sous-marin.
